# EUROPEAN PATENT APPLICATION

(11) **EP 0 950 585 A2**
(43) Date of publication of application: **20.10.1999**
(21) Application number: 99200571.0
(22) Date of filing: 01.03.1999
(51) Int. Cl.: B60R 25/10

(54) **Vehicle anti-theft device with vocal signaller**

(30) Priority: 17.04.1998 IT MI980808
(71) Applicant: Maffioli, Giampaolo, 30100 Venezia (IT); Omenigrandi, Marco, 38068 Rovereto (TN) (IT)
(72) Inventor: Omenigrandi, Marco, 38068 Rovereto (TN) (IT)
(74) Representative: Mittler, Enrico

(57) **Abstract**

Vehicle anti-theft device comprising a detector (1) of polar co-ordinates of the vehicle, a converter (3) associated with the polar co-ordinate detector (1) so as to produce position signals corresponding to the polar co-ordinates being detected, a set of intrusion sensors (5) and a signal transmitter (4) suitable to transmit the position signals. The signal transmitter (4) consists of a radiotelephone (4) that is activated by the set of sensors (5) in order to transmit a radiotelephone call signal and, upon receipt of an answer telephone signal coming from a pre-fixed external telephone set (7), to activate a vocal signal generator (2) to convert the position signals into corresponding vocal signals containing position information and to send them to the signal transmitter (4) for their transmission to the external telephone set (7).

## Description

The present invention refers to a vehicle anti-theft device with vocal signaller, capable to inform a user about the theft being in progress, by means of telephone line, and to localise the vehicle during the possible movements and stops by means of polar co-ordinates that are also transmitted through the telephone line.

In systems currently used by surveillance services, and utilised to detect thefts and to localise the position of expensive automobiles or particular means of transport, a visual signal that defines the co-ordinates of the mean in question during its movements and stops is received on a screen; in these cases no audio signal is employed and the transmission is done by means of radio link, directly to the surveillance operative station.

The possibility to inform directly the owner of the vehicle or anyone else for him/her about the theft and movements through a common use signal as for example an audio signal transmitted through the telephone line, would solve the problem of having to resort to specific means, as for example visual circuits.

In view of the state-of-the-art being described, object of the present invention is to provide a vehicle anti-theft device capable to detect and to communicate in real time the occurrence of an intrusion in progress in a vehicle and, in case the theft is accomplished, to localise its position during possible movements and stops, by means of telephone set communicating directly with one or more users by vocal messages.

According to the present invention, such object is attained by means of a vehicle anti-theft device comprising a detector of polar co-ordinates of the vehicle, a converter associated with the detector of polar co-ordinates so as to produce position signals corresponding to the polar co-ordinates being detected, a set of intrusion sensors and a signal transmitter suitable to transmit position signals, characterised in that the signal transmitter consists of a radiotelephone that is activated by the set of sensors in order to transmit a radiotelephone call signal and, upon receipt of an answer telephone signal coming from a pre-fixed external telephone set, to activate a vocal signal generator to convert the position signals into corresponding vocal signals containing position information and to send them to the transmitter for their transmission to the external telephone set.

The features and advantages of the present invention will become evident from the following detailed description of an embodiment thereof, that is illustrated as a non-limiting example in the enclosed drawing, in which:

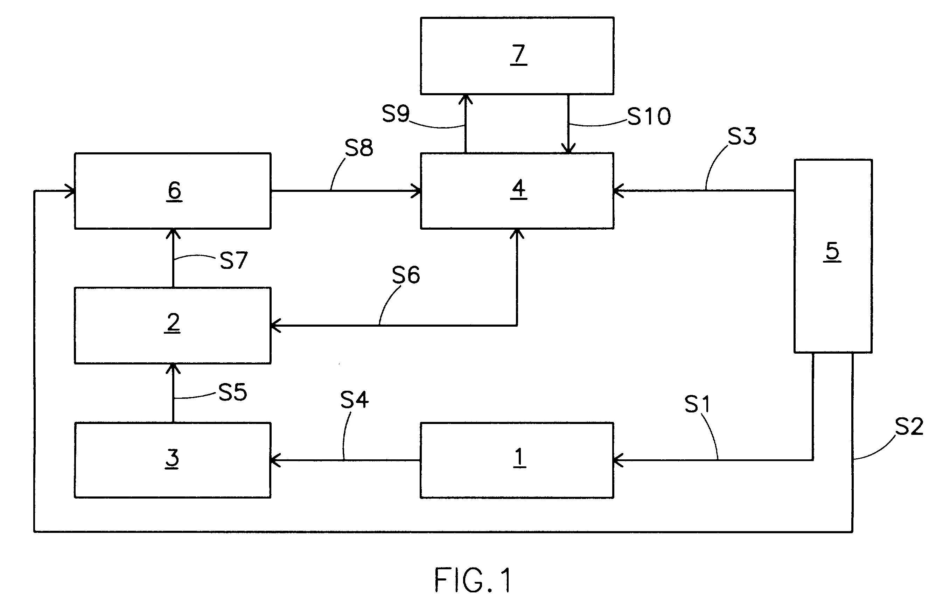

Figure 1 shows a block scheme of an anti-theft device according to an embodiment of the present invention.

In Figure 1, the most significant elements of the anti-theft device in question are rendered with the relative signals S1-S10 for communicating each other: there are provided a polar co-ordinate detector 1 (Global Positioning System, G.P.S., with digital output), a vocal signal generator 2, including a set of EEPROM memories having memorised messages or a delta modulation vocal synthesiser, a converter or decoder 3, interposed between the G.P.S. 1 and the vocal generator 2, a GSM type radiotelephone set 4, provided with internal memories to memorise telephone numbers and to dial calls automatically, a set of sensors 5 for detecting the starting of the engine and the lifting up of the vehicle (relays and microswitches), a timer 6 connected to the input of the GSM radiotelephone 4 at low frequency (L.F.), and finally a user 7, meant as telephone set of one or more users, to which the messages processed by the anti-theft device are sent.

The sensors 5 are connected to the G.P.S. 1, to the timer 6 and to the radiotelephone 4, transmitting respectively the signals S1, S2 and S3 for the activation of the aforesaid elements. The G.P.S. transmits an output digital signal S4 to the decoder 4, which is in turn connected with the vocal generator 2 by means of a signal S5. A signal S6 gets also to the vocal generator 2 from the GSM radiotelephone 4, and the vocal generator 2 sends an output signal S7 to the timer 6, which sends a low frequency signal S8 to the radiotelephone 4.

The user 7 receives a signal S9 (vocal message) from the radiotelephone 4 and in turn it can send a return signal S10 to the same.

The activation/turning off of the device, though remaining in stand-by, is done by means of a hidden key switch or a radio or infrared control.

Once the device has been activated, if there is an attempt to start the engine, that is detected by a relay connected in parallel with the fuel pump feed or the starter system, or a lifting of the vehicle from the ground, that is detected by one or more microswitches in parallel with one or more shock absorbers, the sensors 5 send activation signals S1, S2 and S3 respectively to the G.P.S. detector 1, to the timer 6 and to the GSM radiotelephone 4. Immediately the radiotelephone 4 is activated and makes the telephone call to the number predefined by the user 7; at the answering signal of the selected number, the GSM activates, by means of the signal S6, the vocal generator 2, which in turn sends the pre-established vocal message S7 (for example a first warning of theft being in progress) to the timer device 6 and through the low frequency signal S8 and the GSM 4 (signal S9) to the user 7 connected by telephone.

After a determined period of time, the G.P.S. also is activated and sends a digital signal S4 containing the information of the polar co-ordinates of the vehicle, that are opportunely codified into a determined protocol (for example RS232), to the converter 3, which processes the digital information being received and pilots the vocal generator 2 by means of the signal S5, so that a vocal message S9 defining in real time the exact position of the vehicle is sent to the timer device 6, and therefore, through the radiotelephone 4, to the user 7, with periodical updates that are determined by the timer 6 (for example every 10 seconds).

After an interval of time (for example 30 seconds) the connection of the device with the user is automatically interrupted for a determined interval (i.e. 10 minutes), during which, if it is necessary to know the new position of the vehicle, it is possible to request it to the device by composing the telephone number of the GSM radiotelephone 1 from any telephone set and, once there is a connection, to send an identification code S10 (for example a Dual Tone Multiple Frequency, DTMF) in order to activate a new position vocal message.

Upon expiration of a determined time (i.e. 30 minutes), the call from the anti-theft device is not done automatically any more, but in order to be informed on the state of the position it is necessary to call from the outside in order to subsequently activate the vocal message with the proper identification code.

All the aforementioned intervals of time, in addition to being purely indicative, are controlled by the timer device 6, which therefore provides for the proper activation and turning off of the device and the synchronisation of the different operative steps.

In addition, the presence of a rechargeable electric battery with adequate value is provided, that is put in parallel with the anti-theft device, in order to allow the correct operation of the various constituting elements, and to face up to the largest possible number of violation acts that are carried out to realise the theft.

## Claims

1. Vehicle anti-theft device comprising a detector (1) of polar co-ordinates of the vehicle, a converter (3) associated with said polar co-ordinate detector (1) so as to produce position signals corresponding to the polar co-ordinates being detected, a set of intrusion sensors (5) and a signal transmitter (4) suitable to transmit position signals, characterised in that said signal transmitter (4) consists of a radiotelephone (4) that is activated by said set of sensors (5) in order to transmit a radiotelephone call signal and, upon receipt of an answer telephone signal coming from a pre-fixed external telephone set (7), to activate a vocal signal generator (2) to convert said position signals into corresponding vocal signals containing position information and to send them to said signal transmitter (4) for their transmission to said external telephone set (7).

2. Device according to claim 1, characterised in that it comprises a timer (6) connected with said set of sensors (5), with said vocal signal generator (2) and with said signal transmitter (4) to define a time synchronisation of said vocal signals.

3. Device according to any one of the previous claims, characterised in that said device is activated by said external telephone set (7) by means of telephone call to said signal transmitter (4) and sending of an identification code.

4. Device according to claim 3, characterised in that said identification code is a DTMF.

5. Device according to any one of claims from 2 to 4, characterised in that it periodically transmits said vocal signals to said external telephone set (7) with time intervals that are controlled by said timer (6).

6. Device according to any one of the previous claims, characterised in that said vocal signals are periodically updated by said polar co-ordinate detector (1).

7. Device according to any one of the previous claims, characterised in that said set of sensors (5) comprises at least a relay that is connected in parallel with the fuel feed pump of said vehicle means.

8. Device according to any one of the previous claims, charactensed in that said set of sensors (5) comprises at least a relay that is connected in parallel with the starter system of said vehicle means.

9. Device according to any one of the previous claims, characterised in that said set of sensors (5) comprises at least a microswitch that is connected in parallel with at least a shock absorber of said vehicle means.

10. Device according to any one of the previous claims, characterised in that said polar co-ordinate detector (1) is a G.P.S. with digital output.

11. Device according to any one of the previous claims, characterised in that said radiotelephone (4) is a GSM type with external low frequency input.

12. Device according to any one of the previous claims, characterised in that said vocal signal generator (2) comprises a delta modulation vocal synthesis.

13. Device according to any one of claims from 1 to 11, characterised in that said vocal signal generator (2) comprises at least one EEPROM memory with memorised messages.

14. Device according to any one of the previous claims, characterised in that the activation and turning off of said device is done by means of a key switch.

15. Device according to any one of claims from 1 to 13, characterised in that the activation and turning off of said device is done by means of a radio control.

16. Device according to any one of claims from 1 to 13, characterised in that the activation and turning off of said device is done by means of an infrared control.

17. Device according to any one of the previous claims, characterised in that it comprises a rechargeable electric battery in parallel with said device.
